# EUROPEAN PATENT APPLICATION

(11) **EP 3 012 949 A1**
(43) Date of publication of application: **27.04.2016**
(21) Application number: 14814074.2
(22) Date of filing: 10.06.2014
(51) Int. Cl.: H02K 21/24

(54) **IMPROVEMENTS TO ROTATING MAGNETIC FIELD MACHINES**

(30) Priority: 21.06.2013 ES 201300586
(71) Applicant: Pérez Rodríguez, Arturo, 28220 Majadahonda (Madrid) (ES); López Martín, José Luis, 28220 Majadahonda (Madrid) (ES)
(72) Inventor: Pérez Rodríguez, Arturo, 28220 Majadahonda (Madrid) (ES); López Martín, José Luis, 28220 Majadahonda (Madrid) (ES)
(74) Representative: Isern-Jara, Nuria
(86) International application number: PCT/ES2014/070478
(87) International publication number: WO 2014/202808

(57) **Abstract**

The patent entitled "Improvements to rotating magnetic field machines" relates to changes to the structures of the stator and of the inductor system of conventional rotating magnetic field machines. The first change consists of the fact that the stator poles are axial, so that there are no slots between the shoes thereof in the air gap, the windings are in the axial portion and are prefabricated coils, eliminating power loss, electromagnetic and mechanical vibration, electromagnetic emissions, and start-up torque, with a much lower copper content. The second change concerns the inductor system, which is made up of multiple cores, with a shared collector and yoke, which greatly reduces the amount of copper needed, with external dimensions similar to those of the conventional electromagnet that they replace in these machines or in any other sphere of use, for the same number of amperes per turn. It may be used in all rotating field machines.

## Description

### Field of the invention.

The improvements proposed in this invention patent relate to the structures of the stator and the excitation system of conventional rotating magnetic field machines. The improvements to the excitation electromagnets may be applied to many other machines and apparatuses.

### Background art.

The applicant is not aware of any other stator or excitation topology like those proposed in this patent, which may be applied to generators and engines, both conventional and excited by magnetic transference, the latter being the object of the utility model U 200402396 and the invention patent P 201200334, of the applicant, as well as to other machines and apparatuses.

### Explanation of the innovation.

The innovation consists of the fact that the stator poles are axial, do not have slots between the shoes of the poles in the air gap, and in that each excitation electromagnet is formed by several equal electromagnets in parallel, which share a common yoke or cylinder head and a common collector or shoe.

The perfected stator has the advantage over the conventional stator that it eliminates voltage and power loses, electromagnetic and mechanical vibration, and start-up torque, the copper content thereof is at least 25 % lower, and it has a better cooling air passage, its size being equal or smaller than the conventional stator.

The improved electromagnet has 50 % less copper than the conventional one, for the same number of amperes per turn, its size being equal or smaller and having a much better cooling air passage.

Both the common collector and the yoke may be permanent magnets.

### Drawings

Figure No. 1 is a view seen from the axis, of a plate of the conventional stator.
Figure 2 is a side section along the axis and viewed from the geometric axis of the improved stator.
Figure 3 is a section along the axis of a conventional inductor.
Figure 4 is a section along the geometric axis of the improved inductor.

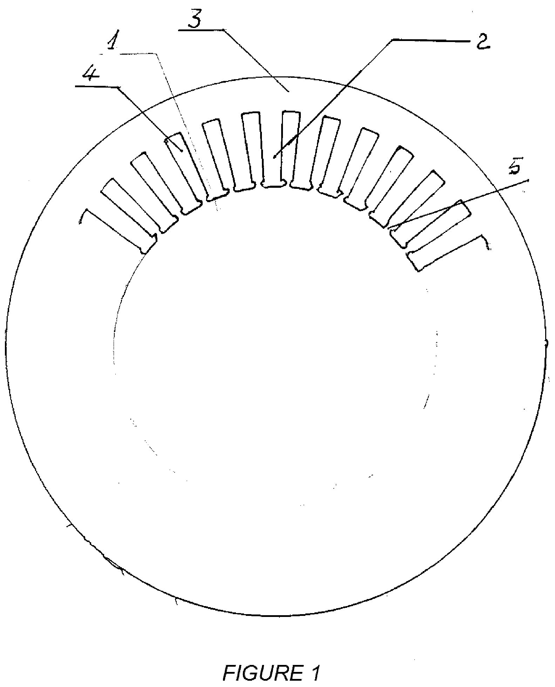

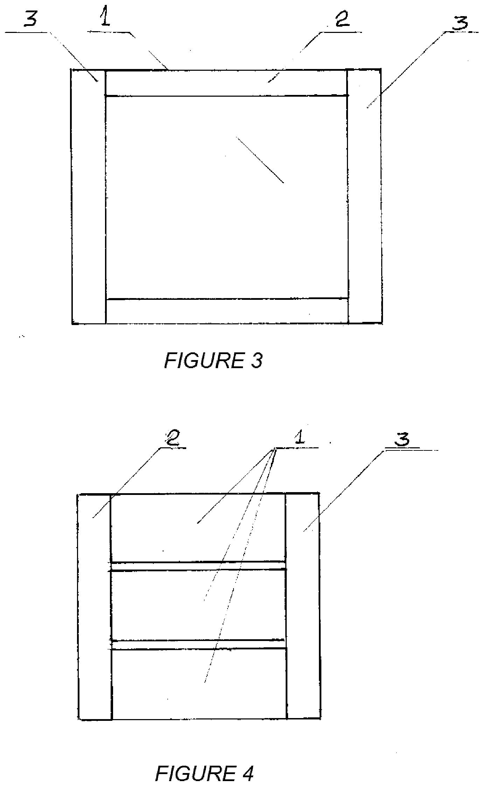

### Explanation of figures 1 and 3.

In Fig. 1: position 1 is the enlargement or shoe of a pole; 2 is the radial pole; 3 is the yoke or cylinder head; 4 is the space between poles for housing the coil or winding; 5 is the slot between the pole shoes.

In Fig. 3: 1 is the core or armature of the electromagnet; 2 is the coil wound in the core; 3 are the polar parts: yoke or cylinder head and shoe or collector.

### Description of an embodiment of the improved stator.

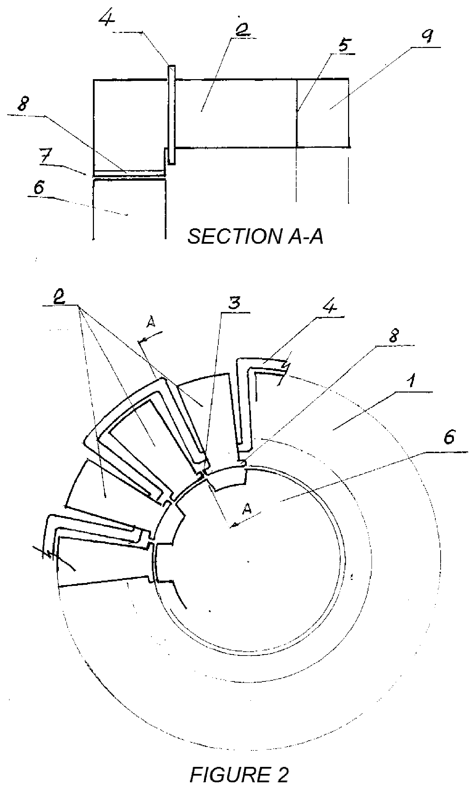

In figure No. 2, can be observed a section A-A, through the geometric axis, of the stator 1 armature assembly, formed by as many cores or axial poles 2 as required by the design chosen. In this figure can be observed that the slot between the poles 3 may be as small as needed, because the conductors forming the stator winding 4 are introduced in each pole through the end 5 opposite to the area where the rotor 6 rotates, spaced apart from the stator by the air gap 7.

In the area of the air gap 7, the heads poles of the stator have enlargements 8, or shoes, between which, there is a slot 3, having a surface that is a very small fraction of the pole surface, for example, a tenth or less, or none. In addition, the heads of the stator winding are much shorter than in the conventional stator, because the turns 4, are housed in the axial enlargements of the poles 2, Fig. 2, without interfering one another. That is why the length of the electric conductor of the improved winding is shorter than that of the conventional one. In a specific case of a commercial automotive alternator, the decrease or saving amounts to 35 %, which is quite significant.

The axial poles 2, described above, share, as in the case of the conventional radial poles, a common yoke 9, where the passage of the magnetic flux takes place. The yoke 9 may be a magnet.

The stator coils 4, are not superimposed, but are placed in successive segments of the axial cores 2, Fig 2, so that may be manufactured with suitable molds and inserted in the cores, before being fastened to the yoke by appropriate mechanical means of common use.

In addition to the aforementioned advantages, the air cooling of the stator coils is much better than in the conventional arrangement, due to the fact that the axial cores and the windings thereof leave large passages for the cooling air. All the above may be applied to an axial air gap.

### Description of an improved excitation electromagnet.

The improvements being claimed consist of replacing the conventional electromagnet with several electromagnets having a smaller section 1, Fig. 4, in parallel, located between a soft iron plate joining the polarities, for example, North, which herein is known as collector or shoe 2, and another one joining the South polarities, which herein is known as cylinder head or yoke 3, having the same external dimensions as the conventional one, and whose content as far as the conductor wire is concerned for the same number of amperes per turn is much lower than that of the conventional electromagnet.

The air cooling is better in the improved inductor, given the same external dimensions, since it has a larger length of wire exposed to the air, and a better air passage, than the conventional inductor.

The cores of the magnets of the improved electromagnet may be permanent magnets, surrounded by their corresponding coils.

In addition, the collector and the cylinder head may be permanent magnets, with coordinated polarities.

It should be noted that this excitation electromagnet may be applicable for other uses, since the described system, which in the patent is related to the excitation of electric machines, may be used in other machines and apparatuses as well.

## Claims

1. Improvements to rotating magnetic field machines, which modify the structure of the stator, which has slots between poles in the air gap, and of the inductor system, having one single core, of the conventional alternator, with the aim of facilitating the construction, enhancing the operation, and decreasing the cost of the machinery, **characterized in that** the poles of the stator are axial and do not have slots between poles, in the air gap, either radial or axial, and **in that** each excitation electromagnet is formed by several equal electromagnets in parallel, sharing a common yoke or cylinder head, and a common collector or shoe, according to the attached specification and drawings, and to the following claim.

2. Improvements to rotating magnetic field machines, according to claim 1, **characterized in that** the cores and shoes and yokes of the excitation electromagnets and the cylinder head or yoke of the stator poles, are magnets.
